(19) Europäisches Patentamt
European Patent Office
Office européen des brevets

(11) **EP 4 624 049 A2**

(12) **EUROPEAN PATENT APPLICATION**

(43) Date of publication:
**01.10.2025 Bulletin 2025/40**

(21) Application number: 25188075.3

(22) Date of filing: **07.02.2022**

(51) International Patent Classification (IPC):
***B02C 23/00*** (2006.01)

(52) Cooperative Patent Classification (CPC):
(C-Sets available)
**B22F 9/04; B22F 1/06;** B22F 1/14; B22F 3/18;
B22F 2003/208; B22F 2009/046; B22F 2009/047;
B33Y 70/00; C22C 1/0416; C22C 1/0425 (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(62) Document number(s) of the earlier application(s) in
accordance with Art. 76 EPC:
**22924596.4 / 4 477 337**

(71) Applicant: **NISSAN MOTOR CO., LTD.**
**Yokohama-shi, Kanagawa
221-0023 (JP)**

(72) Inventors:
- **MEKATA, Moe**
  **Atsugi-shi, Kanagawa, 243-0123 (JP)**
- **YOSHIDA, Akira**
  **Atsugi-shi, Kanagawa, 243-0123 (JP)**

- **UEHARA, Yoshitaka**
  **Atsugi-shi, Kanagawa, 243-0123 (JP)**
- **NAKASHI, Takaichi**
  **Atsugi-shi, Kanagawa, 243-0123 (JP)**
- **AKIBA, Shinichi**
  **Atsugi-shi, Kanagawa, 243-0123 (JP)**
- **ITOU, Akira**
  **Atsugi-shi, Kanagawa, 243-0123 (JP)**

(74) Representative: **Hoefer & Partner Patentanwälte
mbB
Pilgersheimer Straße 20
81543 München (DE)**

Remarks:
This application was filed on 08-07-2025 as a
divisional application to the application mentioned
under INID code 62.

(54) **METAL POWDER FORMING METHOD**

(57) The metal powder forming method is a metal powder forming method for forming metal powder (M1) by cutting a surface of a metal workpiece (1), including a plastic forming step for forming a second surface (S2) having a plurality of protrusions (30) aligned at least in one direction on a first surface (S1) of the workpiece (1) with a plastic forming tool (10), and a cutting step for forming the metal powder (M1) by cutting the plurality of protrusions (30) with a cutting tool (20).

FIG. 1

EP 4 624 049 A2

(52) Cooperative Patent Classification (CPC): (Cont.)

C-Sets
B22F 2998/10, B22F 2009/046, B22F 1/14;
B22F 2999/00, B22F 1/05, B22F 10/10;
B22F 2999/00, B22F 1/05, B22F 10/18;
B22F 2999/00, B22F 1/14, B22F 2009/047,
B22F 1/065;
B22F 2999/00, B22F 9/04, B22F 3/18,
B22F 2003/247;
B22F 2999/00, B22F 10/10, B22F 2003/208;
B22F 2999/00, B22F 2009/046, B22F 3/18;
B22F 2999/00, B22F 2009/046, B22F 3/18,
B22F 2003/247

**Description**

TECHNICAL FIELD

The present invention relates to a metal powder forming method.

BACKGROUND ART

In the manufacturing method of a molded body disclosed in Patent Document 1, a molding material contains metal fine particles obtained by cutting metal and forming in a scale shape, and a resin. The molding material is shorter than the maximum length of the metal fine particles in the scale shape contained in the molding material. The metal fine particles are injected into a mold through an injection port which allows the metal fine particles to be injected into the mold in the same direction when forming the molded body. Thereby, the directions of the metal fine particles are aligned, and a molded body having an orientation in heat transfer and electrical conductivity can be manufactured.

CITATION LIST

PATENT LITERATURE

Patent Literature 1: Japanese Patent Application Publication No. 2017-206728

SUMMARY OF INVENTION

TECHNICAL PROBLEM

However, in an existing method of obtaining metal powder by cutting metal, the formed metal powder contains metal particles having various shapes, particle sizes, aspect ratios, and the like. That is, the shape of metal particles contained in the formed metal powder may not be controlled. Therefore, the formed metal powder contains metal particles that cannot be used for subsequent molding, and in some cases, metal particles having a desired shape and the like must be selected from the formed metal powder.

An object of the present invention is to control a shape of metal particles contained in a metal powder formed by cutting a workpiece.

TECHNICAL SOLUTION

A metal powder forming method according to one aspect of the present invention is a metal powder forming method for forming a metal powder by cutting a surface of a metal workpiece, including a plastic forming step for forming a second surface having a plurality of protrusions on a first surface of the workpiece, and a cutting step for forming metal powder by cutting the plurality of protrusions.

ADVANTAGEOUS EFFECTS

According to the present invention, it is possible to control a shape of metal particles contained in metal powder formed by cutting a workpiece.

BRIEF DESCRIPTION OF DRAWINGS

[FIG. 1] FIG. 1 is a schematic side view showing an arrangement relationship between a workpiece, a rolling tool, and a cutting tool in a metal powder forming method according to a first embodiment.
[FIG. 2] FIG. 2 is a schematic side view for illustrating the metal powder forming method according to the first embodiment, as viewed from an arrow II in FIG. 1.
[FIG. 3A] FIG. 3A is a schematic side view showing a rolling tool according to the first embodiment.
[FIG. 3B] FIG. 3B is a schematic cross-sectional view along line IIIB-IIIB in FIG. 3A showing the rolling tool according to the first embodiment.
[FIG. 4] FIG. 4 is a schematic cross-sectional view along line IV-IV in FIG. 1 for illustrating a rolling step according to the first embodiment.

[FIG. 5] FIG. 5 is a schematic side view showing a cutting tool according to the first embodiment and a second embodiment.

[FIG. 6] FIG. 6 is a schematic partial cross-sectional view along line VI-VI in FIG. 2a for illustrating a cutting step according to the first embodiment and the second embodiment.

[FIG. 7] FIG. 7 is a schematic partial cross-sectional view for illustrating a cutting step according to the first embodiment and the second embodiment showing an exemplary embodiment of metal powder formed by a workpiece.

[FIG. 8A] FIG. 8A is a schematic side view showing a rolling tool according to the second embodiment.

[FIG. 8B] FIG. 8B is a schematic cross-sectional view along line VIIIB-VIIIB in FIG. 8A showing a rolling tool according to the second embodiment.

[FIG. 9] FIG. 9 is a schematic partial cross-sectional view corresponding to FIG. 4 for illustrating a rolling step according to the second embodiment.

[FIG. 10] FIG. 10 is a schematic partial cross-sectional view corresponding to FIG. 9 for illustrating an operation and effect of the metal powder forming method according to the second embodiment, showing a plurality of protrusions after a load is removed in the rolling step.

[FIG. 11] FIG. 11 is a schematic side view showing an arrangement relationship between a workpiece, a rolling tool, and a cutting tool in the metal powder forming method according to a third embodiment.

[FIG. 12] FIG. 12 is a schematic plan view as viewed from an arrow XII in FIG. 11 for illustrating the metal powder forming method according to the third embodiment.

[FIG. 13] FIG. 13 is a schematic partial side view as viewed from the arrow XIII in FIG. 12 for illustrating the cutting step according to the third embodiment.

[FIG. 14] FIG. 14 is a schematic partial perspective view for illustrating the cutting step according to the third embodiment, showing an exemplary embodiment of metal powder formed from a workpiece.

[FIG. 15] FIG. 15 is a schematic side view for illustrating a spheronization step according to an embodiment, showing an arrangement relationship between a first plate member, a second plate member, and metal powder.

[FIG. 16] FIG. 16 is a schematic plan view showing an operation of the second plate member with respect to the first plate member in the spheronization step according to an embodiment.

DESCRIPTION OF EMBODIMENTS

An average aspect ratio or an average particle size of metal powder M1 formed by a metal powder forming method according to an embodiment was measured using a particle image analyzer (Product Name: Morphologi 4, manufactured by Malvern Panalytical). More specifically, the metal powder M1 containing thousands to tens of thousands of metal particles M2 was dispersed on a glass plate using a powder dispersion unit, photographed with an objective lens of a predetermined magnification, and the average aspect ratio or the average particle size was calculated using image analysis software. The magnification of the objective lens can be set as appropriate according to the shape and the like of the metal powder M1. The aspect ratio is a ratio between the length of the major axis and the length of the minor axis of a particle in imaging in a predetermined direction. The particle size is a circular equivalent diameter of the particle. The circular equivalent diameter is the diameter of a circle having an area equal to the projected area of the photographed particle. In the following description, the average aspect ratio and the average particle size of the metal powder M1 is simply referred to as the aspect ratio and the particle size, respectively.

In the metal powder forming method according to the embodiment, for example, the metal powder M1 having a particle size of greater than or equal to 1 $\mu$m, and less than or equal to 500 $\mu$m, can be formed. The metal powder M1 may be used as a molding material in a metal 3D printer (not shown). In this case, the particle size of the metal powder M1 may be, for example, greater than or equal to 1 $\mu$m, and less than or equal to 100 $\mu$m. A mode size of the metal powder M1 may be greater than or equal to 25 $\mu$m, and less than or equal to 75 $\mu$m. The mode size is a particle size, or a range of particle sizes, most frequently included in the measured sample. The metal powder M1 can be used as a powder material supplied to a powder bed in powder bed 3D printing, for example. The metal powder M1 may be used in other types of metal 3D printers. For example, the metal powder M1 may be used as a powder material mixed with a thermoplastic resin in a fused deposition modeling (FDM) 3D printer.

A metal powder forming method according to an embodiment will be described below with reference to the drawings. The metal powder forming method according to the embodiment is a metal powder forming method for forming a metal powder M1 by cutting a surface of a metal workpiece 1, including a plastic forming step and a cutting step. The metal powder M1 is composed of a large number of metal particles M2. In the following description, elements having the same function are denoted by the same reference signs, and duplicate descriptions are omitted.

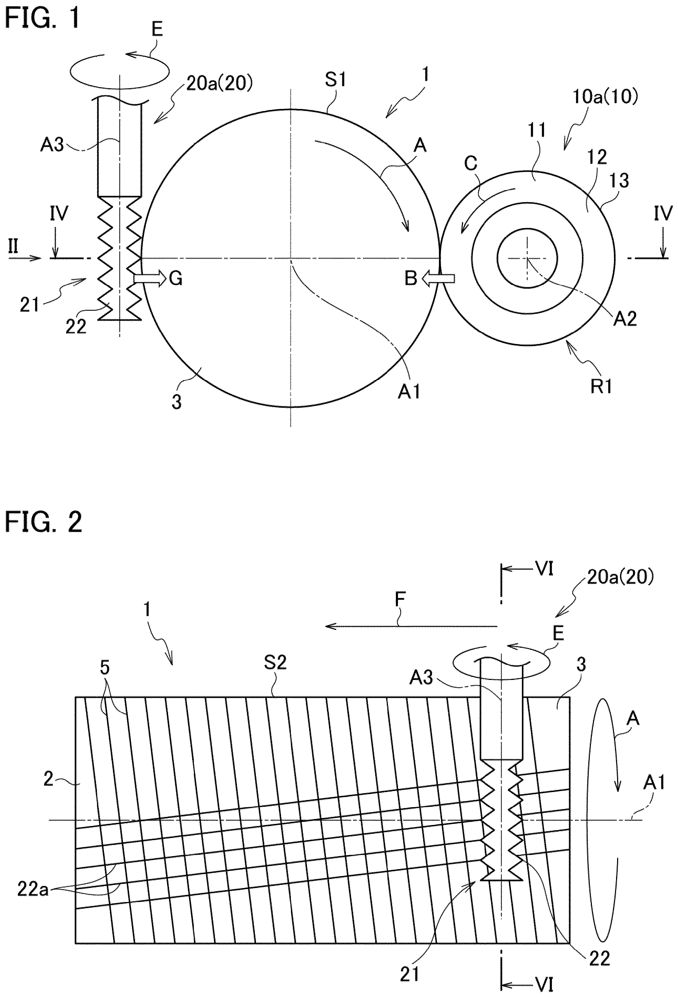

The workpiece 1 is a member used as a material for the metal powder M1, and may be composed of, for example, aluminum, aluminum alloy, copper, copper alloy, and the like. In the examples shown in FIGS. 1 and 2, the workpiece 1 extends with a first axis A1 as a central axis, and has a substantially circular shape in a cross section perpendicular to the first axis A1. Therefore, the workpiece 1 has a cylindrical shape as a whole. However, the shape of the workpiece 1 is not limited to this, for example, and a part of the workpiece 1 may have a portion formed with a smaller radial dimension than other portions. The workpiece 1 may have a shape such as an elliptical column shape or a polygonal column shape.

The workpiece 1 has a first surface S1 in a state before a plastic forming step and a cutting step are performed. The first surface S1 has an axisymmetric shape around the first axis A1. In the example shown in FIG. 1, the first surface S1 constitutes an outer circumferential surface of the workpiece 1. That is, the first surface S1 may have a cylindrical surface with the first axis A1 as a central axis.

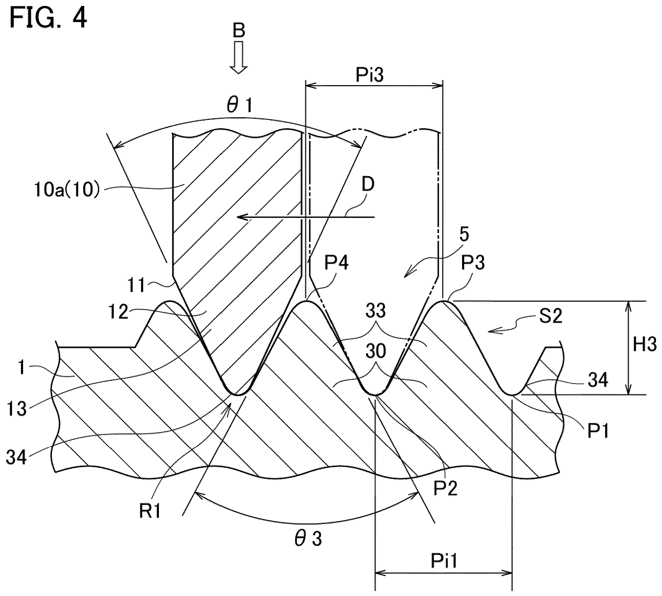

The plastic forming step is a step for forming a plurality of protrusions 30 on the first surface S1, for example, as shown in FIG. 4, by performing plastic forming on the workpiece 1. In the following description, the surface of the workpiece 1 on which the plurality of protrusions 30 are formed by plastic forming is referred to as a second surface S2. In the plastic forming, a plastic forming tool 10 is pressed against the first surface S1, so that the workpiece 1 is plastically deformed to form the plurality of protrusions 30. The plurality of protrusions 30 are formed in an aligned state at least in one direction. The material of the plastic forming tool 10 preferably has a hardness higher than that of the workpiece 1. For example, the plastic forming tool 10 may be made of a cemented carbide. A sliding film (not shown) may be formed on a forming pattern of the plastic forming tool 10. The sliding film may be, for example, a film of Diamond-Like Carbon (DLC). The sliding film may be formed by known deposition methods such as Physical Vapor Deposition (PVD), Chemical Vapor Deposition (CVD), and the like. A forming pattern is a pattern having a predetermined shape formed on a surface of a plastic forming tool in order to plastically deform the surface of an object to be formed to a desired shape.

In plastic forming, the first surface S1 of the workpiece 1 is plastically flowed by pressing the forming pattern against the workpiece 1 at a predetermined pressure, and the base material is plastically deformed without being scraped off. An example of plastic forming in which the first surface S1 is plastically deformed by a rolling to form the plurality of protrusions 30 will be described, but without limitation thereto. For example, the plurality of protrusions 30 may be formed by pressing. The rolling step described below is an example of a plastic forming step, but without limitation thereto. For example, the plastic forming step may be a pressing step.

In the cutting step, a plurality of the protrusions 30 formed by the plastic forming is cut with a cutting tool 20. When the plurality of the protrusions 30 is cut, the metal powder M1 is obtained as chips. In the following description, the surface of the workpiece 1 after the plurality of protrusions 30 is cut is referred to as a third surface S3.

First Embodiment

Next, a metal powder forming method according to the first embodiment will be described with reference to FIGS. 1 to 7. In the example shown in FIG. 1, the plastic forming tool 10 is arranged on one side in a radial direction of the workpiece 1, and the cutting tool 20 is arranged on another side of the workpiece 1. In this embodiment, a rolling tool 10a can be used as the plastic forming tool 10. A rotary tool 20a can be used as the cutting tool 20. The arrangement relationship between the workpiece 1, the plastic forming tool 10, and the rotary tool 20a is not limited to the illustrated example, but can be set as appropriate according to the shape, dimensions, and the like of a processing device that will carry out the metal powder forming method according to the embodiment or the workpiece 1.

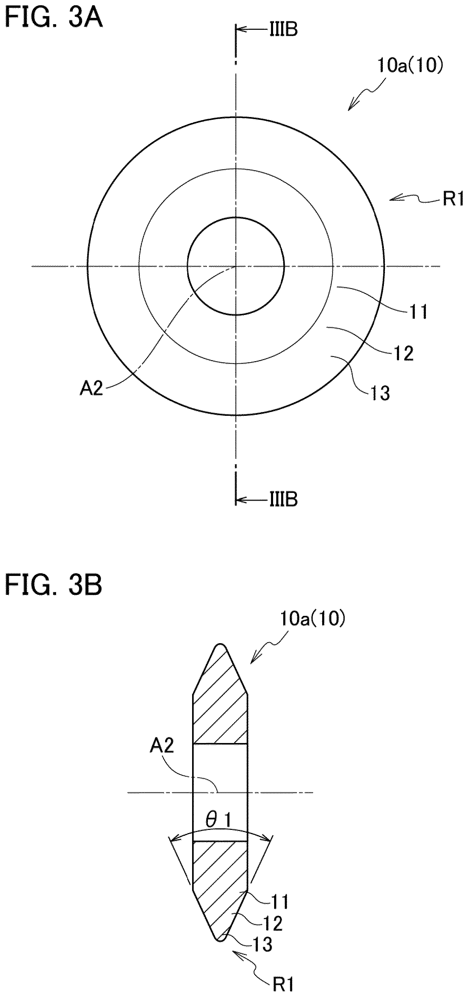

Next, the rolling tool 10a will be described. The rolling tool 10a is a tool rotatable around a second axis A2, and in the examples shown in FIGS. 3A and 3B, it has a disk-like shape in the axial direction parallel to the second axis A2. The second axis A2 may extend in a direction inclined to the first axis A1 when viewed in an axial direction parallel to a direction perpendicular to the first axis A1 and the second axis A2.

As illustrated in the drawings, an outer circumferential portion 11 of the rolling tool 10a is constructed such that the dimension in a width direction decreases in a radially outward direction of the rolling tool 10a. Thus, a rolling blade 12 extending in a circumferential direction of the rolling tool 10a is formed in the outer circumferential portion 11. The rolling blade 12 corresponds to a forming pattern of the rolling tool 10a. The outer circumferential portion 11 is a portion extending in a circumferential direction on a radially outward side of the rolling tool 10a. A radially outward direction of the rolling tool 10a is a direction opposite to the second axis A2 in a radial direction of the rolling tool 10a. The width direction of the rolling tool 10a is a direction parallel to the second axis A2.

The cross section shown in FIG. 3B is a cross section perpendicular to the circumferential direction of the rolling tool 10a. In this cross section, a tip angle $\theta 1$ is formed at a tip portion 13 of the rolling blade 12. The rolling blade 12 is pressed against the workpiece 1 in the rolling step described later, and plastically deforms the workpiece 1. The tip portion 13 constitutes the radially outward side of the rolling blade 12. The angle of the tip angle $\theta 1$ may be greater than or equal to 30 degrees and less than or equal to 90 degrees. The angle of the tip angle $\theta 1$ may be 60 degrees. In the cross section, the radially outward end of the tip portion 13 may be curved so as to protrude in the radially outward direction with a predetermined radius of curvature R1. The radius of curvature R1 may be set to a value less than or equal to the particle size of the metal powder M1 to be obtained by the metal powder forming method according to the embodiment. For example, when the metal powder M1 should be formed having a particle size of 50 $\mu$m, the radius of curvature R1 may be set to a value greater than or equal to 1 $\mu$m, and less than or equal to 50 $\mu$m. Thus, the metal powder M1 having a desired particle size can be formed more reliably.

Arithmetic mean roughness Ra of a surface of the rolling blade 12 may be greater than or equal to 0.01 $\mu$m, and less than or equal to 0.1 $\mu$m. Thus, it is possible to suppress excessive friction force between the rolling blade 12 and the workpiece 1 in the rolling step described later. Therefore, wear of the rolling blade 12 can be suppressed, and the shape of the protrusions 30 formed in the rolling step can be more reliably controlled. Maximum height roughness Rz of the surface of the rolling blade 12 may be greater than or equal to 0.1 $\mu$m, and less than or equal to 1.0 $\mu$m. The arithmetic mean roughness Ra and the maximum height roughness Rz are indices indicating surface roughness specified in "Product Geometric Properties Specification (GPS) - Surface Properties: Contour Curve Method - Terminology, Definitions and Surface Properties Parameters" of the Japanese Industrial Standard (JIS B0601:2013).

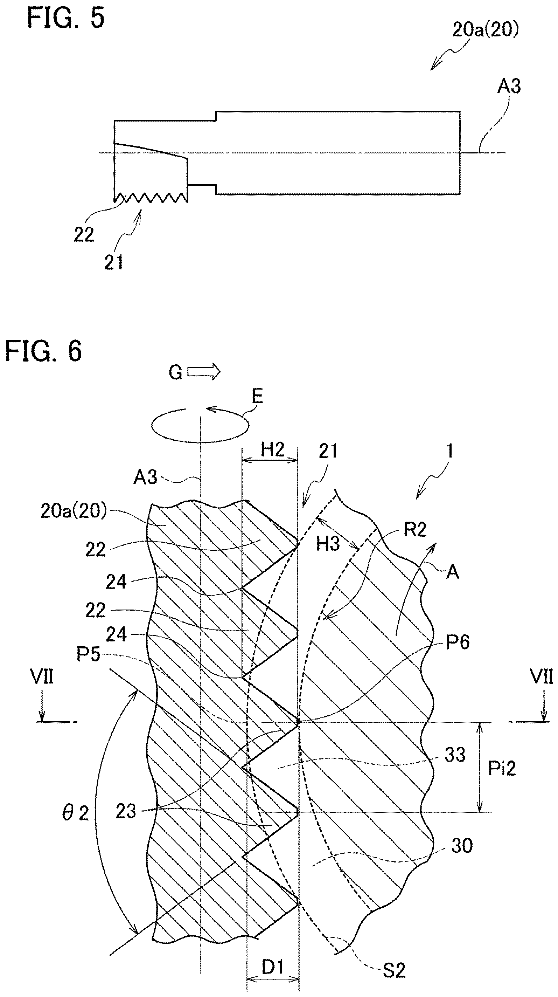

Next, the rotary tool 20a will be described. The rotary tool 20a may be, for example, an end mill including a cutting blade 21. In the example shown in FIG. 5, the cutting blade 21 is arranged at one end of the rotary tool 20a. A plurality of nicks 22 are formed on the cutting blade 21 and have a comb-like shape as a whole. In the illustrated example, the plurality of nicks 22 are formed on the cutting blade 21 in a direction parallel to a third axis A3. By rotating the rotary tool 20a around the third axis A3, the surface of the workpiece 1 can be cut by the plurality of nicks 22. The rotary tool 20a is not limited to the illustrated example, and may be, for example, a roughing end mill (not shown) having a wavy outer circumferential blade.

As shown in FIG. 6, a tip angle $\theta2$ is formed at a tip portion 23 of the nicks 22 in the circumferential direction of the rotary tool 20a. The circumferential direction of the rotary tool 20a is a direction around the third axis A3 of the rotary tool 20a. The tip portion 23 of the nicks 22 constitutes a radially outward side of the rotary tool 20a. The angle of the tip angle $\theta2$ may be greater than or equal to 45 degrees and less than or equal to 90 degrees. The angle of the tip angle $\theta2$ may be 60 degrees. In the circumferential direction, the nicks 22 may be curved with a predetermined radius of curvature R2 on the radially outermost portion of the rotary tool 20a so as to protrude in a radially outward direction. The radius of curvature R2 may be greater than or equal to 1 $\mu$m, and less than or equal to 100 $\mu$m. In the circumferential direction, a pitch Pi2 of the nicks 22 to each other may be greater than or equal to 10 $\mu$m, and less than or equal to 100 $\mu$m. A height H2 of the nicks 22 may be greater than or equal to 10 $\mu$m, and less than or equal to 100 $\mu$m. The height H2 is a distance between a portion of the nicks 22 forming a radially outermost portion of the rotary tool 20a, and a bottom portion 24. The bottom portion 24 is a portion formed between the nicks 22.

A ratio between the tip angle $\theta1$ of the rolling blade 12 and the tip angle $\theta2$ of the nick 22 may be provided within a predetermined range. For example, the angle of the tip angle $\theta1$ may be 0.7 to 1.5 times the angle of the tip angle $\theta2$. Thus, an aspect ratio of the metal powder M1 can be further reduced. The tip angle $\theta1$ may be equal to the tip angle $\theta2$.

Next, the rolling step using the rolling tool 10a will be described with reference to the examples illustrated in FIGS. 1, 2, and 4. One end 2 of the workpiece 1 is fixed to a chuck portion of an NC (numerically controlled) lathe (not shown), for example, and the rolling step can be performed while the workpiece 1 is rotated around the first axis A1. In the rolling step, the rolling is performed for the workpiece 1 rotating in a direction of arrow A around the first axis A1 as the center axis.

In the rolling step, the rolling blade 12 of the rolling tool 10a is pressed using a predetermined pressing load against the first surface S1 of the workpiece 1 that is rotating around the first axis A1. In the example shown in FIG. 1, the rolling tool 10a is moved in the direction of an arrow B to be pressed. The rolling tool 10a is then moved in a feed direction while the workpiece 1 is rotated. Thus, as shown in FIGS. 2 and 4, grooves 5 are formed on the first surface S1, and a part of the workpiece 1 is plastically deformed to be raised around the rolling blade 12, and the protrusions 30 are formed. At this time, the rolling tool 10a may be rotated in a direction of an arrow C (see FIG. 1) around the second axis A2 as the center axis according to the rotation of the workpiece 1. The feed direction is a direction in which the rolling tool 10a is moved to form a plurality of the protrusions 30 aligned in one direction on the first surface. In the example shown in FIG. 4, the feed direction is a direction of an arrow D, and the rolling tool 10a is fed from another end 3 of the workpiece 1 toward the one end 2. The feed direction may be parallel to the first axis A1 of the workpiece 1.

The surface of the workpiece 1 is plastically deformed by the rolling to be raised along a trajectory of the rolling blade 12, and the protrusions 30 are continuously formed in the circumferential direction of the workpiece 1. In rolling, the rolling tool 10a is moved in the feed direction while the workpiece 1 is rotated. Therefore, the rolling blade 12 is moved on a spiral trajectory relative to the first surface S1 of the workpiece 1. As a result, the spiral grooves 5 are formed on the first surface S1 as shown in FIG. 2. Both sides in a width direction of the grooves 5 formed in this way are defined by the protrusions 30. Therefore, a second surface S2 including a plurality of the protrusions 30 which are aligned at least in a direction parallel to the first axis A1 is formed on the surface of the workpiece 1.

As illustrated in FIG. 4, a groove 5 is formed by transferring the shape of the tip portion 13 of the rolling blade 12 to the first surface S1. Therefore, a tip angle $\theta3$ of the protrusions 30 and the tip angle $\theta1$ of the rolling blade 12 in the cross section perpendicular to the circumferential direction of the second surface S2 of the workpiece 1 are substantially equal. The tip angle $\theta3$ is an angle of a tip portion 33 in each of the protrusions 30. Therefore, the tip angle $\theta3$ may be 0.7 to 1.5 times the tip angle $\theta2$ of the nicks 22. The tip angle $\theta3$ may be equal to the tip angle $\theta2$. A portion of the second surface S2 formed by a bottom portion 34 may be curved at a predetermined radius of curvature so as to protrude toward the first axis A1 in a cross section perpendicular to the circumferential direction of the workpiece 1. The bottom portion 34 is a portion defining the groove 5 on the side of the first axis A1. The radius of curvature may be approximately equal to the radius of curvature R1 of the tip portion 13.

The protrusions 30 include the tip portions 33 formed by raising of the workpiece 1. The tip portions 33 are a portion of the protrusions 30 constituting the radially outward side of the workpiece 1. A pitch Pi1 of the grooves 5 to each other in the direction parallel to the first axis A1 can be controlled by the feed rate of the rolling tool 10a. Therefore, a pitch Pi3 of the plurality of the protrusions 30 in the direction parallel to the first axis A1 can be controlled by the feed rate of the rolling tool 10a. The feed rate of the rolling tool 10a is a moving speed in the feed direction of the rolling tool 10a.

In the illustrated examples, the pitch Pi1 is a distance between a point P1 and a point P2 in a direction parallel to the first axis A1. The points P1 and P2 are portions of adjacent bottom portions 34 located closest to the first axis A1. The pitch Pi3 is a distance between points P3 and P4 in a direction parallel to the first axis A1. The points P3 and P4 are portions of the adjacent protrusions 30 located most radially outward on the workpiece 1. As illustrated in the drawings, the feed rate of the rolling tool 10a may be controlled so that the pitch Pi1 and the pitch Pi3 are substantially equal.

A height H3 of a protrusion 30 can be controlled by a pressing load when the rolling tool 10a is pressed against the workpiece. The height H3 is a height of each of the protrusions 30 in the radial direction of the second surface S2 of the workpiece 1. For example, the height H3 can be increased by increasing the pressing load. In the illustrated example, the height H3 is a distance between the points P1 and P3 in a radial direction of the workpiece 1. Further, the pressing load and the height H3 may satisfy a relation of the following Formula 1. X in Formula 1 is the Brinell hardness (HB) of the workpiece 1, which is the hardness specified in the Japanese Industrial Standards "Brinell Hardness Test - Part 1: Test Method" (JIS Z 2243-1: 2018) and "Brinell Hardness Test - Part 2: Hardness Value Table" (Z 2243-2: 2018).

$$\text{Height H3 [unit: } \mu m] = (-0.022X + 2.137) \times \text{Pressing Load [unit: N]} \ \text{... (Formula 1)}$$

The height H3 may be 0.7 to 1.3 times the width of each of the protrusions 30 in a direction parallel to first axis A1. The height H3 may be substantially equal to the width. For example, the distance between the points P1 and P3 in the radial direction of the workpiece 1 may be equal to the distance between the points P1 and P2 in the direction parallel to the first axis A1. In the illustrated example, the width of each of the protrusions 30 corresponds to the pitch Pi1 of the grooves 5.

Next, a cutting step for performing cutting using the rotary tool 20a will be described. In the example of cutting shown in FIGS. 1 and 2, a plurality of the protrusions 30 formed by rolling are cut with the rotary tool 20a. In cutting, the rotary tool 20a cuts in a direction of an arrow G at a predetermined cutting depth D1 while being rotated in a direction of an arrow E around the third axis A3 as a center axis, and is moved in a direction of an arrow F. In the illustrated example, the direction of the arrow F is parallel to the first axis A1, but the direction of the arrow F is not limited thereto. The direction in which the rotary tool 20a is moved may be a direction that obliquely intersects the first axis A1 in an axial direction perpendicular to the first axis A1 and the third axis A3. The rotary tool 20a may move in a direction opposite to the arrow F.

The cutting depth D1 is a cutting depth of the rotary tool 20a relative to the second surface S2 of the workpiece 1. In the example shown in FIG. 1, the rotary tool 20a cuts in the direction of the arrow G, perpendicular to the first axis A1 and the third axis A3. In the example shown in FIG. 6, the cutting depth D1 is a distance in the radial direction of the workpiece 1 between a point P5 and a point P6 in the cross section perpendicular to the first axis A1 and passing through the third axis A3. Note that the point P5 is a portion of a protrusion 30 closest to the third axis A3. The point P6 is a portion of the tip portion 23 of the nick 22 closest to the first axis A1.

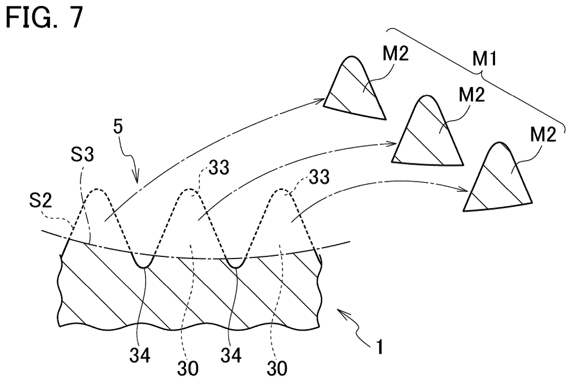

By feeding the rotary tool 20a in the direction of the arrow F while rotating at the cutting depth D1, the protrusions 30 are cut by the nicks 22 as illustrated in FIG. 7. At this point, a plurality of metal particles M2 are formed as chips. The metal powder M1 is composed of a plurality of the metal particles M2. The dashed line shown in the drawing schematically shows the trajectory of the tips of the nicks 22. The metal particles M2 have, for example, a substantially tetrahedral shape, so that the aspect ratio of the metal powder M1 can be closer to 1. That is, the aspect ratio, particle size, and the like of the metal powder M1 can be controlled by controlling the shape of the metal particles M2. In the illustrated example, portions of the three protrusions 30 aligned in one direction is cut by the plurality of nicks 22, but without limitation thereto. Four or more protrusions aligned in one direction may be cut almost simultaneously.

In the metal powder forming method according to this embodiment, a cutting step can be performed while a rolling step is performed. For example, while the workpiece 1 is rotated, rolling is performed on the first surface S1 by the rotary tool 20a, and at the same time, the protrusions 30 formed by the rolling can be cut with the rotary tool 20a. That is, while the workpiece 1 is rotated around the first axis A1, formation of the protrusions 30 by rolling and cutting of the protrusions 30 by cutting can be performed simultaneously.

In the examples shown in FIGS. 1 and 2, the rotation of the workpiece 1 in the direction of the arrow A and the movement of the rotary tool 20a in the direction of the arrow F are performed simultaneously. Therefore, the trajectories 22a of the nicks 22 relative to the workpiece 1 are inclined with respect to the first axis A1 viewed in the axial direction perpendicular to the first axis A1 and the third axis A3, as shown in FIG. 2. In obtaining the metal powder M1, an extension of the direction of the trajectories 22a should not be parallel to the extension of the direction of the grooves 5. That is, the trajectories 22a should intersect the extended direction of the protrusions 30. The extending direction of the trajectories 22a and the extended direction of the grooves 5 may be orthogonal. That is, the trajectory 22a and the extended direction of the protrusions 30 may be orthogonal. Thus, the protrusions 30 can be cut in a direction perpendicular to the extended direction thereof, so that the shape of the metal particles M2 can be more reliably controlled.

After cutting the plurality of protrusions 30 from the other end 3 to the one end 2 of the workpiece 1, the rotary tool 20a may be returned to the other end 3 while preventing the rotary tool 20a from contacting the workpiece 1. The workpiece 1 may be cut at the cut depth D1 again by the rotary tool 20a which is then fed in the direction of the arrow F to cut the plurality of protrusions 30 to form the metal powder M1. In this case, the rotation of the workpiece 1 can be controlled so that the cutting blade 21 cuts the uncut portions of protrusions 30.

Second Embodiment

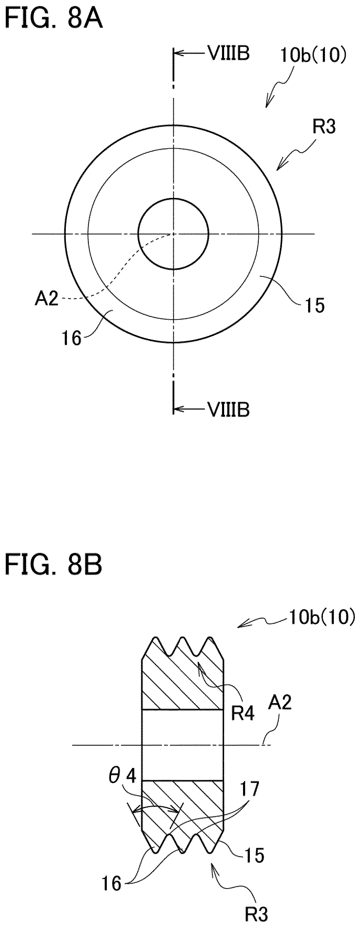

Next, a metal powder forming method according to a second embodiment will be described with reference to FIGS. 8A, 8B, 9, and 10. In the second embodiment, a rolling tool 10b is used as the plastic forming tool 10 instead of the rolling tool 10a used in the first embodiment. The workpiece 1 and the cutting tool 20 are constructed in the same manner as in the first embodiment.

The rolling tool 10b is a tool rotatable around the second axis A2, and has a disk-like shape in the axial direction parallel to the second axis A2 in the examples shown in FIGS. 8A and 8B. The rolling tool 10b includes an outer circumferential surface 15, ridges 16, and a bottom portion 17. The outer circumferential surface 15 is a radially outer surface of the rolling tool 10b and extends in the circumferential direction of the rolling tool 10b around the second axis A2 as a center axis. A plurality of ridges 16 extending in the circumferential direction are formed on the outer circumferential surface 15. Therefore, in the cross section perpendicular to the circumferential direction of the rolling tool 10b, the outer circumferential surface 15 has a wavy shape. Further, the outer circumferential surface 15 corresponds to a forming pattern of the rolling tool 10b. The bottom portion 17 is a portion formed between the ridges 16. In the illustrated example, three ridges 16 are formed on the outer circumferential surface 15, but without limitation thereto. The number of ridges can be set as appropriate according to the dimension of the workpiece 1 in the direction of the first axis A1, the processing time of the rolling step, and the like. For example, two ridges 16, or four or more ridges 16 may be formed on the outer circumferential surface 15.

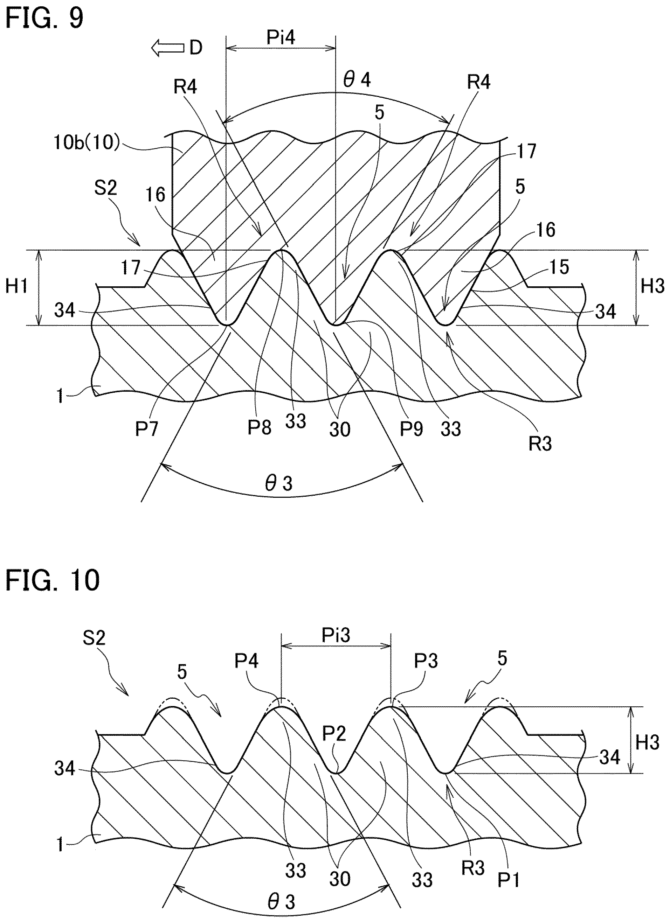

In the cross section perpendicular to the circumferential direction of the rolling tool 10b shown in FIGS. 8B and 9, rolling tool 10a is constructed such that the dimension of the ridges 16 in the width direction decreases in a radially outward direction. Therefore, a tip angle 04 is formed in the ridges 16 in the cross section. The angle of the tip angle 04 may be greater than or equal to 30 degrees and less than or equal to 90 degrees. The angle of the tip angle 04 may be 60 degrees. Furthermore, in the cross section, the radially outer side of the ridges 16 may be curved with a radius of curvature R3 so as to protrude in the radially outward direction. The radius of curvature R3 may be greater than or equal to 1 $\mu$m and less than or equal to 100 $\mu$m.

In the radial direction of the rolling tool 10b, a height H1 of the ridges 16 is set to be greater than or equal to the particle size of the metal powder M1 to be formed in this embodiment. In the cross section shown in FIG. 9, the height H1 is a distance between a point P7 and a point P8 in the radial direction of the rolling tool 10b. Note that the point P7 is the portion located on a radially outermost side of the ridges 16. The point P8 is a portion of the bottom portion 17 located closest to the second axis A2.

A pitch Pi4 of the ridges 16 may be set to a value of 0.7 to 1.3 times the particle size of the metal powder M1 to be formed in this embodiment. The pitch Pi4 may be set to a value equal to the particle size of the metal powder M1. The pitch Pi4 is a pitch of the ridges 16 in the direction of the second axis A2. In the cross section shown in FIG. 9, the pitch Pi4 is a distance between the points P7 and P9. The points P7 and P9 are portions of the adjacent ridges 16 located on a radially outermost side of the rolling tool 10b.

In the cross sections shown in FIGS. 8B and 9, the bottom portion 17 may be curved with a radius of curvature R4 so as to protrud toward the second axis A2. The radius of curvature R4 may be set to a value less than or equal to the particle size of the metal powder M1 to be formed in this embodiment. For example, when the metal powder M1 having a particle size of 50 $\mu$m is formed by the metal powder forming method according to this embodiment, the radius of curvature R4 may be set to greater than or equal to 1 $\mu$m, and less than or equal to 50 $\mu$m.

Next, a rolling step in which the rolling tool 10b is used to perform rolling on the workpiece 1 will be described. Similar to the first embodiment, when rolling, the outer circumferential surface 15 of the rolling tool 10b is pressed against the first surface S1 of the workpiece 1 rotating around the first shaft A1 by a predetermined pressing load. The rolling tool 10a is moved in the feed direction (direction of the arrow D) while the workpiece 1 is rotated. As a result, a plurality of the grooves 5 are formed on the first surface S1, and a part of the workpiece 1 is plastically deformed to be raised around the ridges 16, forming a plurality of the protrusions 30. In this case, the rolling tool 10b may be rotated according to the rotation of the workpiece 1 around the second axis A2 as the center axis.

In the example shown in FIG. 9, the outer circumferential surface 15 is pressed on the workpiece 1 by a predetermined pressing load, so that the tip portion 33 and the bottom portion 17 come into contact with each other. That is, when rolling is performed, the pressing load of the rolling tool 10b may be set so that the protrusions 30 and the bottom portion 17 come into contact with each other. In this case, in the cross section perpendicular to the circumferential direction of the workpiece 1, the radius of curvature of the tip portion 33 is substantially equal to the radius of curvature R4 of the bottom portion 17. The pressing load and the height H3 of the protrusion 30 satisfy the relation of Formula 2 below. In Formula 2, X is the Brinell hardness (HB) of the workpiece 1, and n is the number of the ridges 16 formed on the outer circumferential surface 15 of the rolling tool 10b, and n is an integer equal to 2 or more. In the illustrated example, n=3.

$$\text{Height H3 [unit: } \mu\text{m]} = (-0.022X+2.137) \times \text{Pressing load [unit: N]}/n \dots \text{(Formula 2)}$$

When rolling is performed, the protrusions 30 may be formed so that the height H3 is greater than or equal to the particle size of the metal powder M1 to be formed in this embodiment. That is, the pressing load of the rolling tool 10b may be set so that the second surface S2 of the workpiece 1 is raised to a height greater than or equal to the particle size of the metal powder M1 in the radial direction of the workpiece 1.

Since the cutting step according to this embodiment is performed in the same manner as in the first embodiment using the rotary tool 20a, a description thereof will be omitted.

Third Embodiment

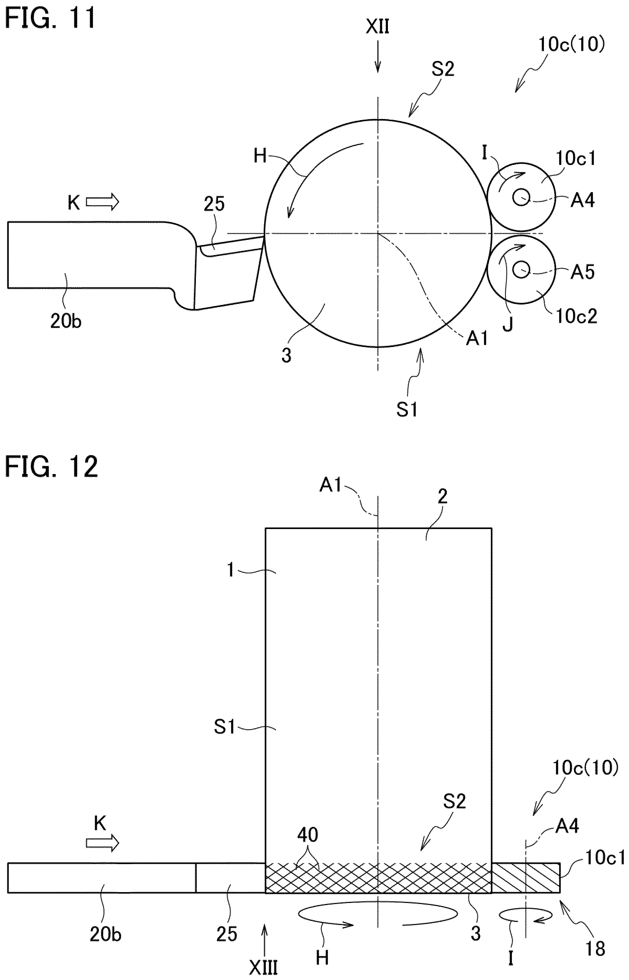

Next, a metal powder forming method according to a third embodiment will be described with reference to FIGS. 11 to 14. In the third embodiment, a knurling tool 10c can be used as the plastic forming tool 10. The knurling tool 10c is a type of rolling tool. Further, a bit 20b can be used as the cutting tool 20. The workpiece 1 illustrated in the drawings is constructed in the same manner as in the first embodiment.

In the example shown in FIGS. 11 and 12, the knurling tool 10c is arranged on one side and the bit 20b is arranged on the other side in the radial direction of the workpiece 1. The arrangement relationship between the workpiece 1, the knurling tool 10c, and the bit 20b is not limited to the example shown in the drawings, and can be set as appropriate according to the shape, dimensions, and the like of the processing device for implementing the metal powder forming method according to the embodiment.

The knurling tool 10c may include a first knurling tool 10c1 and a second knurling tool 10c2. In the illustrated example, the first knurling tool 10c1 is a roller type tool which is rotatable about a fourth axis A4 and has a disk-like shape viewed in an axial direction parallel to the fourth axis A4. The second knurling tool 10c2 is a roller type tool which is rotatable about a fifth axis A5 and has a disk-like shape viewed in an axial direction parallel to the fifth axis A5. The fourth axis A4 or the fifth axis A5 illustrated in the drawing extends parallel to the first axis A1, but without limitation thereto. The fourth axis A4 or the fifth axis A5 may extend in a direction inclined to the first axis A1.

A forming pattern 18 is formed on the outer circumferential surface of the first knurling tool 10c1. The forming pattern 18 may be constituted by a plurality of ridges. In the example shown in FIG. 12, the ridges extend in a direction intersecting the fourth axis A4 viewed in a radial direction of the first knurling tool 10c1, and the ridges are arranged in parallel with each other. Further, the forming pattern formed on the outer circumferential surface of the second knurling tool 10c2 may be constructed by extending a plurality of ridges (not shown) in a direction intersecting in an extended direction of the ridges of the first knurling tool 10c1.

The illustrated knurling tool 10c includes the first knurling tool 10c1 and the second knurling tool 10c2 as two roller type tools, but without limitation thereto. For example, the knurling tool 10c may include only one roller type tool. In this case, the outer circumferential surface of the one roller type tool may include a plurality of recesses having a shape such as a square pyramid form, a hemisphere form, or the like.

The bit 20b includes a cutting blade 25. The cutting blade 25 has a flat blade shape extending in a direction parallel to the first axis A1. As shown in FIG. 12, the width of the cutting blade 25 of the bit 20b may be substantially equal to the width of the roller tool 10c in a direction parallel to the first axis A1. Further, a center of the end portion of the cutting blade 25 on the side of the workpiece 1 and a center of the end portion of the roller tool 10c on the side of the workpiece 1 may be arranged at the same position in a direction parallel to the first axis A1.

In the rolling step according to this embodiment, the one end 2 of the workpiece 1 is fixed to the chuck portion of an NC lathe in the same manner as in the first embodiment, and rolling is performed while the workpiece 1 is rotated around the first axis A1 in a direction of an arrow H (see FIG. 11). In the rolling step, the knurling tool 10c is pressed against the first surface S1 of the workpiece 1 rotating around the first axis A1 by a predetermined pressing load. As a result, the first surface S1 is raised in a shape corresponding to a forming pattern of the knurling tool 10c, forming a plurality of projections 40. At this point, the first knurling tool 10c1 may be rotated in the direction of an arrow I according to the rotation of the workpiece 1. The second knurling tool 10c2 may be rotated in a direction of an arrow J. The plurality of projections 40 is an aspect of the plurality of protrusions 30 formed by rolling.

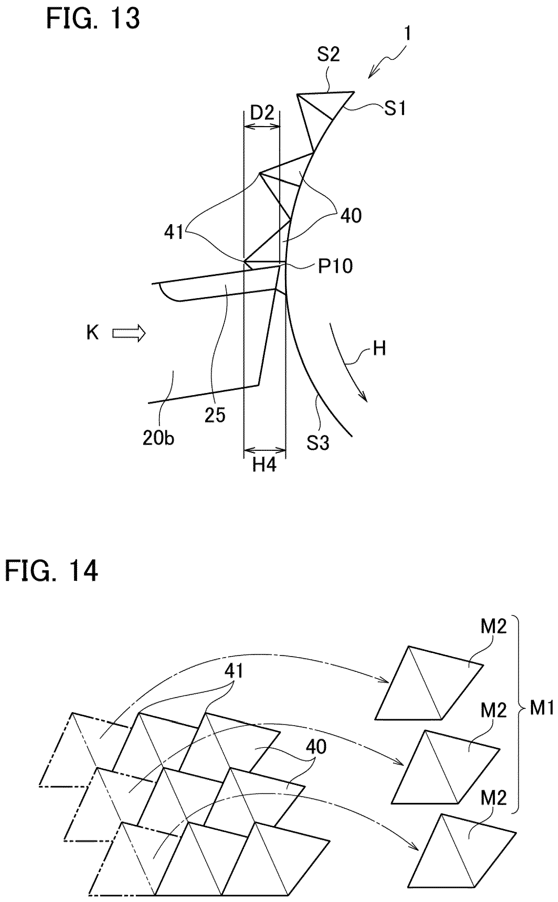

In the illustrated example, the plurality of ridges of the first knurling tool 10c1 and the plurality of ridges of the second knurling tool 10c2 are transferred to the first surface S1 to form the plurality of projections 40 having a substantially square pyramid shape (see FIGS. 13 and 14). Therefore, the projections 40 are periodically arranged in a direction in which grooves formed by transferring the ridges of the first knurling tool 10c1 extend, and in a direction in which grooves formed by transferring the ridges of the second knurling tool 10c2 extend. That is, a plurality of the projections 40 arranged in two dimensions are formed on the first surface S1 by rolling. The shape of the projections 40 is not limited to the illustrated example. The projections 40 may have a hemispherical shape, for example.

When rolling is performed, the pitch of the plurality of projections 40 can be adjusted by adjusting the pitch of the ridges of the first knurling tool 10c1, or the pitch of the ridges of the second knurling tool 10c2. That is, the pitch of the plurality of projections 40 can be controlled by the pitch of the forming pattern formed on the knurling tool 10c. The pitch of the plurality of projections 40 is a distance between apexes 41 of the adjacent projections 40. The apexes 41 are portions of projections 40 located on a radially outermost side in the radial direction of the workpiece 1.

In addition, the height H4 of projections 40 in the radial direction of the workpiece 1 can be controlled by the pressing load of the knurling tool 10c in the rolling step. For example, the height H4 of the projections 40 can be lower by reducing the pressing load of the knurling tool 10c in the rolling step. In the example shown in FIG. 13, the height H4 is a distance between the apexes 41 and the first surface S1 viewed in the axial direction parallel to the first axis A1.

Next, a cutting step for performing cutting using the bit 20b will be described. In the example of cutting shown in FIG. 13, a plurality of the projections 40 formed by the knurling tool 10c are cut using the bit 20b. In cutting, the bit 20b may be cut in at a predetermined cut depth D2 in a direction of an arrow K and fixed. At this time, movement of the bit 20b in a direction perpendicular to the cutting direction may be restricted. That is, when the plurality of projections 40 are cut by the bit 20b, the bit 20b may be constructed such that it is movable only in the cutting direction. However, the construction of the bit 20b is not limited thereto. For example, the bit 20b may be constructed such that it is movable in the direction parallel to the first axis A1 of the workpiece 1 in a cut-in state. In this case, the feed rate of the bit 20b in the direction parallel to the first axis A1 may be set according to the rotational speed of the workpiece 1 around the first axis A1. For example, the feed rate of the bit 20b may be set to be greater than the rotational speed of the workpiece 1. In the illustrated example, the cut depth D2 is a distance in the radial direction of the workpiece 1 between the apexes 41 of the projections 40 and a point P10 of the cutting blade 25 that is closest to the first axis A1. Further, the cut depth D2 may be less than or equal to the height H4 of the projections 40 in the radial direction of the workpiece 1. The cut depth D2 may be equal to the height H4. As a result, it is possible to more reliably form the metal particles M2 in accordance with the shape of the projections 40, and further, it is possible to avoid forming irregularities on the third surface S3 on the side of the workpiece 1. As in the examples shown in FIGS. 11 and 12, the direction of the arrow K may be a direction orthogonal to the first axis A1.

By cutting into the second surface S2 with the bit 20b, at least a part of the plurality of projections 40 are cut by the cutting blade 25 to form metal particles M2 as chips, as illustrated in FIG. 14.

In the first to third embodiments described above, rolling is performed on the first surface S1 of the workpiece to form the second surface S2, and cutting is performed on the second surface S2. However, further rolling and cutting may be performed on the surface of the workpiece 1 after cutting. That is, a second rolling may be performed to form the plurality of protrusions 30 on the third surface S3 of the workpiece 1 after cutting the plurality of protrusions 30 rolled in the rolling step. Then, a second cutting is performed to form the metal powder M1 by cutting the plurality of protrusions 30 formed in the second rolling step with the cutting tool 20.

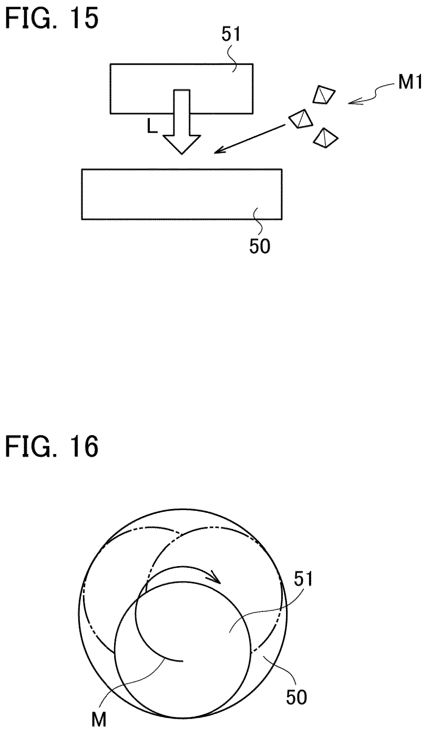

Further, a spheronization step may be applied to the metal powder M1 obtained according to the embodiments described above. The spheronization step is a step for further reducing the aspect ratio of the metal powder M1. As illustrated in FIGS. 15 and 16, a first plate member 50 and a second plate member 51 are used in the spheronization step. In the illustrated example, the first plate member 50 and the second plate member 51 are disk-shaped members having a substantially circular shape in a plan view, but are not limited thereto. The first plate member 50 and the second plate member 51 may be members having a substantially rectangular shape, a substantially polygonal shape, or the like in a plan view. The materials of the first plate member 50 and the second plate member 51 may be set as appropriate according to the materials of the metal powder M1. For example, at least the surface of the first plate member 50 and the second plate member 51, on which the metal powder M1 is sandwiched in the spheronization step described below may be composed of a metal such as stainless steel or a diamond sintered body such as polycrystalline diamond (PCD). A sliding film may be formed on the surface. The sliding film may be a film of DLC, for example.

In the spheronization step, the metal powder M1 is first disposed between an upper surface of the first plate member 50 and a lower surface of the second plate member 51. Next, the second plate member 51 is pressed against the first plate member 50 by applying a predetermined load. In the example shown in FIG. 15, the second plate member 51 is pressed against the first plate member 50 in a direction of an arrow L. Thus, the metal powder M1 is sandwiched between the first plate member 50 and the second plate member. Next, the first plate member 50 and the second plate member are slid while the predetermined load is applied. In the example shown in FIG. 16, the second plate member 51 is slid in a direction of an arrow M to form a substantially circular trajectory with respect to the first plate member 50 in a plan view. As a result, the metal powder M1 is rolled between the first plate member 50 and the second plate member 51, and can be plastically deformed so that the aspect ratio thereof is closer to 1. The predetermined load can be set as appropriate according to the material and hardness of the metal powder M1 as well as the material, hardness, mass and the like of the first plate member 50 and the second plate member 51. Furthermore, as in the illustrated example, the second plate member 51 may be slid within a range overlapping the first plate member 50 in the plan view.

In some embodiments, the spheronization step may be applied to the metal powder M1 having an aspect ratio of 2 or more. Thus, the aspect ratio of the metal powder M1 can be closer to 1. Further, the spheronization step may be applied to the metal powder M1 having an aspect ratio of greater than or equal to 2 and less than or equal to 5. Thus, a metal powder having an aspect ratio of greater than or equal to 1 and less than or equal to 2 can be formed.

The value of the arithmetic mean roughness Ra of the upper surface of the first plate member 50 and the lower surface of the second plate member 51 may be greater than or equal to 1.0 $\mu$m. Thus, the aspect ratio of the metal powder M1 can be more reliably reduced. The value of the arithmetic mean roughness Ra may be set according to the material of the metal powder M1. For example, when the metal powder M1 is copper or a copper alloy, the value of the arithmetic mean roughness Ra may be greater than or equal to 1.0 $\mu$m, and less than or equal to 3.0 $\mu$m. When the metal powder M1 is aluminum or an aluminum alloy, the value of the arithmetic mean roughness Ra may be greater than or equal to 1.0 $\mu$m, and less than or equal to 2.5 $\mu$m. Thus, the aspect ratio of the metal powder M1 can be more reliably reduced. The value of the arithmetic mean roughness Ra may be set to be within a desired numerical range regardless of the measurement direction of the surface roughness. Thus, the aspect ratio of the metal powder M1 can be more reliably reduced regardless of the sliding direction of the first plate member 50 and the second plate member 51.

(1) A metal powder forming method according to the embodiment is a metal powder forming method for forming metal powder M1 by cutting a surface of a metal workpiece 1: including a plastic forming step for forming a second surface S2 having a plurality of protrusions 30 aligned at least in one direction on a first surface S1 of the workpiece 1 with a plastic forming tool 10, and a cutting step for forming metal powder M1 by cutting the plurality of the protrusions 30 with a cutting tool 20.

According to the metal powder forming method according to the embodiment, the plurality of the protrusions 30 aligned in one direction can be formed by plastic forming. Therefore, the plurality of the protrusions 30 can be formed by plastically deforming the workpiece 1, and the generation of waste metal during formation of the plurality of protrusions 30 can be suppressed. That is, the material yield rate can be improved. In the cutting step, the metal powder M1 is formed by cutting the plurality of the protrusions 30. Therefore, the metal powder M1 having a more uniform aspect ratio, particle size, and the like can be formed. That is, the shape of the metal particles M2 included in the metal powder M1 formed by cutting the workpiece 1 can be controlled.

(2) The plastic forming tool 10 is a rolling tool 10a, 10b, 10c, and the plastic forming step may be a rolling step in which the second surface S2 having the plurality of protrusions 30 are formed on the first surface S1 of the workpiece 1 with the rolling tool 10a, 10b, 10c.

According to the metal powder forming method according to the embodiment, the rolling tool 10a, 10b, 10c can be used to form the plurality of the protrusions 30 by rolling. Therefore, the plurality of the protrusions 30 can be more easily formed.

(3) The first surface S1 of the workpiece 1 has an axisymmetric shape around a first axis A1, and the cutting step may be performed while the rolling step is performed and the workpiece 1 is rotated around the first axis A1.

Thus, the rolling step and the cutting step can be performed while the workpiece 1 having an axisymmetric shape around the first axis A1 is rotated around the first axis A1. That is, while the workpiece 1 is rotated around the first axis A1, the formation of the protrusions 30 by the rolling step and the cutting of the protrusions 30 by the cutting step can be simultaneously performed. Therefore, the processing time for forming the metal powder M1 can be reduced.

(4) In the rolling step, the rolling tool 10a, 10b is moved in a feed direction while being pressed against the first surface S1 of the workpiece 1 rotating around the first axis A1 to form a spiral groove 5 on the first surface S1, so that the plurality of the protrusions 30 aligned at least in a direction parallel to the first axis A1 may be formed.

Thus, the rolling tool 10a, 10b is moved in the direction of the first axis A1 while being pressed against the workpiece 1 rotating around the first axis A1, so that the plurality of the protrusions 30 can be formed. Therefore, the plurality of the protrusions 30 can be more easily formed.

(5) In the rolling step, a pitch Pi3 of the plurality of the protrusions 30 in the direction parallel to the first axis A1 may be controlled by a feed rate of the rolling tool 10a, 10b.

Thus, the pitch Pi3 of the plurality of the protrusions 30 can be more easily controlled. Therefore, when the metal powder M1 is formed by cutting the plurality of the protrusions 30, the metal powder M1 having the same particle size and the like can be more easily formed.

(6) A height H3 of each of the protrusions 30 may be controlled by a pressing load of rolling tool 10a, 10b.

Thus, the height H3 of the plurality of the protrusions 30 can be more easily controlled. Therefore, when the metal powder M1 is formed by cutting the plurality of the protrusions 30, the metal powder M1 having the same particle size and the like can be more easily formed.

(7) The cutting tool 20 is a rotary tool 20a having a plurality of nicks 22 formed on a cutting blade 21, and in the cutting step, the plurality of the protrusions 30 may be cut by the plurality of the nicks 22 while the rotary tool 20a is rotated. Thus, each of the plurality of the protrusions 30 formed on the workpiece 1 can be cut by the nicks 22 formed on the rotary tool 20a. Thus, metal particles M2 corresponding to the shape of the nicks 22 are formed. Therefore, the shape of the metal particles M2 can be more reliably controlled.

(8) The rolling tool 10a is rotatable around a second axis A2 different from the first axis A1, and includes an outer circumferential portion 11 with the second axis A2 as a center axis, and a rolling blade 12 provided on the outer circumferential portion 11 and extending in a circumferential direction, and an angle $\theta1$ of a tip portion 13 of the rolling blade 12 in a cross section perpendicular to the circumferential direction may be 0.7 to 1.5 times an angle $\theta2$ of a tip portion 23 of the nicks 22 viewed in a circumferential direction of the rotary tool 20a.

In the rolling step, the plurality of the protrusions 30 are formed by pressing the rolling blade 12 of the rolling tool 10a. Therefore, an angle $\theta3$ of a tip 33 of the protrusions 30 can be set close to the angle $\theta2$ of the tip 23 of the nicks 22. Thus, the aspect ratio of the formed metal powder M1 can be closer to 1.

(9) The rolling tool 10b is rotatable around a second axis A2 different from the first axis A1, and includes an outer circumferential surface 15 with the second axis A2 as a center axis, a plurality of ridges 16 provided on an outer circumferential surface 15 and extending in a circumferential direction, and a bottom portion 17 between the ridges 16, and in the rolling step, the outer circumferential surface 15 may be pressed against the first surface S1 of the workpiece 1 rotating around the first axis A1 while the rolling tool 10b is rotated around the second axis A2.

Thus, the rolling step can be performed using the rolling tool 10b having a plurality of ridges 16 formed on the outer circumferential surface 15. Therefore, the plurality of protrusions 30 can be formed by pressing the plurality of ridges 16 on the first surface S1 of the workpiece 1, and the forming time of the rolling step can be further reduced.

(10) In the rolling step, a pressing load of the rolling tool 10b may be set so that a part of the second surface S2 raised by pressing the rolling tool 10b comes into contact with the bottom portion 17 of the rolling tool 10b.

In the rolling step, the workpiece 1 is deformed to be raised between the ridges 16 by pressing the rolling tool 10b, so that the plurality of the protrusions 30 can be formed. The portion of the second surface S2 raised by pressing the rolling tool 10b comes into contact with the bottom portion 17 of the rolling tool 10b. Therefore, the shape of the outer circumferential surface 15 of the rolling tool 10b can be more reliably transferred to the workpiece 1, and the shape of the plurality of the protrusions 30 can be more reliably controlled.

(11) A height H1 of each of the ridges 16 is greater than or equal to a particle size of the metal powder M1 in a radial direction of the rolling tool 10b, and in the rolling step, a load may be applied so that the second surface S2 of the workpiece 1 is raised to a height greater than or equal to the particle size of the metal powder M1 in a radial direction of the workpiece 1.

After the plurality of the protrusions 30 are formed on the first surface S1 of the workpiece 1 by pressing the rolling tool 10b, the load applied by the rolling tool 10b to the workpiece 1 is reduced. Then, the height of the protrusions 30 may be reduced by a restoring force generated in the protrusions 30. That is, the height of the protrusions 30 may be reduced when the load is removed in the rolling step. In the example shown in FIG. 10, the protrusions 30 are contracted by the restoring force in the direction of the first axis A1 after removing the load and the height of the protrusions 30 is reduced. Therefore, the height H3 of the protrusions 30 after removing the load is lower than the height of the protrusions 30 before removing the load. In FIG. 10, the shape of the protrusions 30 before removing the load is shown by a dashed line. In the metal powder forming method according to the embodiment, the height H1 of each of the protrusions 16 is set to a value greater than or equal to the particle size of the metal powder M1. Therefore, the rolling tool 10b can be pressed to raise the workpiece 1 so that the height H3 is greater than or equal to the particle size of the metal powder M1 to be formed. Therefore, even if the height of the protrusions 30 is reduced by removing the load, it can be avoided that the height H3 of the protrusions 30 is excessively small compared to the particle size of the metal powder M1 to be formed. Thus, the shape of the metal particles M2 can be more reliably controlled.

(12) In a cross section perpendicular to the circumferential direction of the outer circumferential surface 15 of the rolling tool 10b, the bottom portion 17 is curved with a predetermined radius of curvature R4 so as to protrude toward the second axis A2, and the predetermined radius of curvature R4 may be a value less than or equal to the particle size of the metal powder M1.

As illustrated in FIG. 10, when the load is removed in the rolling step, the height of the protrusions 30 may be decreased by the restoring force, and the radius of curvature of the tip portion 33 may be increased in the cross section perpendicular to the circumferential direction of the workpiece 1. According to the metal powder forming method according to the embodiment, even in such a case, it is avoided that the radius of curvature of the tip portion 33 of the protrusions 30 becomes excessively large in the cross section perpendicular to the circumferential direction of the workpiece 1 after removing the load. Therefore, the shape of the metal particles M2 can be more reliably controlled.

(13) A pitch Pi4 of the ridges 16 in a direction of the second axis A2 of the rolling tool 10b may be 0.7 to 1.3 times the particle size of the metal powder M1.

Thus, it is avoided that the width of each of the protrusions 30 in the direction of the first axis A1 is excessively smaller than the particle size of the metal powder M1 to be formed. Therefore, the shape of the metal particles M2 can be more reliably controlled.

(14) The height of each of the protrusions 30 in a radial direction of the second surface S2 of the workpiece 1 is 0.7 to 1.3 times the width of each of the protrusions 30 in the direction parallel to the first axis A1, and an angle θ3 of each tip portion 33 of the protrusions 30 in a cross section perpendicular to the circumferential direction of the second surface S2 of the workpiece 1 may be 0.7 to 1.5 times the angle θ2 of the tip portion 23 of the nicks 22 viewed in the circumferential direction of the rotary tool 20a.

Thus, the aspect ratio of the formed metal powder M1 can be closer to 1. That is, the shape of the metal particles M2 contained in the metal powder M1 formed by cutting the workpiece 1 can be more reliably controlled.

(15) The first surface S1 of the workpiece 1 has a shape of a cylindrical surface with the first axis A1 as a central axis, and the rolling tool 10a, 10b, 10c may be a knurling tool 10c. The plurality of the protrusions 30 formed in the rolling step may be a plurality of projections 40 formed by pressing the knurling tool 10c against the first surface S1 of the workpiece 1 rotating around the first axis A1 and arranged in two dimensions on the first surface S1.

In the rolling step, a plurality of the projections 40 can be formed on the first surface S1 by pressing the knurling tool 10c against the workpiece 1. Then, the metal particles M2 can be formed by cutting the plurality of the projections 40. Therefore, the shape of the metal particles M2 can be more reliably controlled.

(16) In the rolling step, the pitch of the projections 40 to each other may be controlled by a pitch of a forming pattern formed on the knurling tool 10c, and a height H4 of each of the projections 40 in the radial direction of the workpiece 1 may be controlled by a pressing load of the knurling tool 10c in the rolling step.

Thus, the pitch of the projections 40 formed in the rolling step can be adjusted to each other by adjusting the pitch of the forming pattern formed on the knurling tool 10c. Therefore, the pitch of the projections 40 to each other can be more easily controlled. The height H4 of each of the projections 40 formed on the workpiece 1 can be adjusted by adjusting the pressing load of the knurling tool 10c. Therefore, the height H4 can be more easily controlled. Thus, the shape of the metal particles M2 can be more reliably controlled.

(17) The cutting tool 20 is a bit 20b having a cutting blade 25 parallel to the first axis A1, and the cutting depth D2 of the bit 20b in the cutting step may be less than or equal to the height H4 of each of the projections 40 in the radial direction of the second surface S2 of the workpiece 1.

Thus, the projections 40 can be cut by the bit 20b so that the shape of each of the projections 40 is maintained. Furthermore, in the cutting step, the projections 40 can be cut so that each of the projections 40 is more reliably separated. Therefore, the metal particles M2 corresponding to the shape of the projections 40 can be more reliably formed. That is, the shape of the metal particles M2 can be more reliably controlled.

(18) In the cutting step, the bit 20b can be moved only in the cutting direction, and the width of the cutting blade 25 of the bit 20b may be equal to the width of the knurling tool 10c in the direction of the first axis A1.

Thus, only the plurality of the projections 40 of the workpiece 1 can be cut by the bit 20b. Therefore, the metal particles M2 corresponding to the shape of the projections 40 can be formed. Thus, the shape of the metal particles M2 can be more reliably controlled.

(19) A second rolling step may be performed to further form the plurality of the protrusions 30 on a third surface S3 of the workpiece 1 after the plurality of the protrusions 30 rolled in the rolling step are cut in the cutting step, and a second cutting step may be performed to form the metal powder M1 by cutting the plurality of protrusions 30 formed in the second rolling step with the cutting tool 20.

Thus, the rolling step and the cutting step can be further performed on the third surface S3 of the workpiece 1 after being cut in the cutting step. Therefore, the material yield rate can be improved and the processing time until the desired amount of metal powder M1 is formed can be further reduced.

(20) A sliding film may be formed on the surface of the forming pattern of the rolling tool 10a, 10b, 10c.

Thus, the frictional resistance generated between the rolling tool 10a, 10b, 10c and the workpiece 1 in the rolling step can be reduced. Therefore, it can be avoided that the plurality of the protrusions 30 formed in the workpiece 1 are deformed due to the frictional resistance. That is, the shape of the plurality of the protrusions 30 can be more reliably controlled. Thus, the shape of the metal particles M2 can be more reliably controlled.

The present invention is also explained by the following clauses.

[Clause 1] A metal powder forming method for forming metal powder by cutting a surface of a metal workpiece, comprising:

a plastic forming step for forming a second surface having a plurality of protrusions aligned at least in one direction on a first surface of the workpiece with a plastic forming tool, and

a cutting step for forming metal powder by cutting the plurality of the protrusions with a cutting tool.

[Clause 2] The metal powder forming method according to clause 1, wherein:

the plastic forming tool is a rolling tool, and
the plastic forming step is a rolling step in which the second surface having the plurality of the protrusions are formed on the first surface of the workpiece with the rolling tool.

[Clause 3] The metal powder forming method according to clause 2, wherein:

the first surface of the workpiece has an axisymmetric shape around a first axis, and
the cutting step is performed while the rolling step is performed and the workpiece is rotated around the first axis.

[Clause 4] The metal powder forming method according to clause 3, wherein:
in the rolling step, the rolling tool is moved in a feed direction while being pressed against the first surface of the workpiece rotating around the first axis to form a spiral groove on the first surface, so that the plurality of the protrusions aligned at least in a direction parallel to the first axis is formed.
[Clause 5] The metal powder forming method according to clause 4, wherein in the rolling step, a pitch of the plurality of the protrusions in the direction parallel to the first axis is controlled by a feed rate of the rolling tool.
[Clause 6] The metal powder forming method according to any one of clauses 3 to 5, wherein a height of each of the protrusions is controlled by a pressing load of the rolling tool.
[Clause 7] The metal powder forming method according to any one of clauses 3 to 6, wherein:

the cutting tool is a rotary tool having a plurality of nicks formed on a cutting blade, and
in the cutting step, the plurality of the projections are cut by the plurality of the nicks while the rotary tool is rotated.

[Clause 8] The metal powder forming method according to clause 7, wherein:

the rolling tool is rotatable around a second axis different from the first axis, and comprises an outer circumferential portion with the second axis as a center axis, and a rolling blade provided on the outer circumferential portion and extending in a circumferential direction, and
an angle of a tip portion of the rolling blade in a cross section perpendicular to the circumferential direction is 0.7 to 1.5 times an angle of a tip portion of the nicks viewed in a circumferential direction of the rotary tool.

[Clause 9] The metal powder forming method according to clause 7, wherein:

the rolling tool is rotatable around a second axis different from the first axis, and comprises an outer circumferential surface with the second axis as a central axis, a plurality of ridges provided on the outer circumferential surface and extending in a circumferential direction, and a bottom portion between the ridges, and
in the rolling step, the outer circumferential surface is pressed against the first surface of the workpiece rotating around the first axis while the rolling tool is rotated around the second axis.

[Clause 10] The metal powder forming method according to clause 9, wherein in the rolling step, a pressing load of the rolling tool is set so that a part of the second surface raised by pressing the rolling tool comes into contact with the bottom portion of the rolling tool.
[Clause 11] The metal powder forming method according to clause 9 or 10, wherein:

a height of each of the ridges is greater than or equal to a particle size of the metal powder in a radial direction of the rolling tool, and
a load is applied so that the second surface of the workpiece is raised to a height greater than or equal to the particle size of the metal powder in a radial direction of the workpiece.

[Clause 12] The metal powder forming method according to any one of clauses 9 to 11, wherein:

in a cross section perpendicular to the circumferential direction of the outer circumferential surface of the rolling tool, the bottom portion is curved with a predetermined radius of curvature so as to protrude toward the second axis, and
the predetermined radius of curvature is a value less than or equal to the particle size of the metal powder.

[Clause 13] The metal powder forming method according to any one of clauses 9 to 12, wherein a pitch of the ridges in a direction of the second axis of the rolling tool is 0.7 to 1.3 times the particle size of the metal powder.

[Clause 14] The metal powder forming method according to any one of clauses 7 to 13, wherein:

the height of each of the protrusions in a radial direction of the second surface of the workpiece is 0.7 to 1.3 times the width of each of the protrusions in the direction parallel to the first axis, and

an angle of each tip portion of the protrusions in a cross section perpendicular to the circumferential direction of the second surface of the workpiece is 0.7 to 1.5 times the angle of the tip portion of the nicks viewed in the circumferential direction of the rotary tool.

[Clause 15] The metal powder forming method according to clause 3, wherein:

the first surface of the workpiece has a shape of a cylindrical surface with the first axis as a central axis,

the rolling tool is a knurling tool, and

the plurality of protrusions formed in the rolling step is a plurality of projections formed by pressing the knurling tool against the first surface of the workpiece rotating around the first axis and arranged in two dimensions on the first surface.

[Clause 16] The metal powder forming method according to clause 15, wherein:

in the rolling step, the pitch of the projections to each other is controlled by a pitch of a forming pattern formed on the knurling tool, and

a height of each of the projections in the radial direction of the workpiece is controlled by a pressing load of the knurling tool in the rolling step.

[Clause 17] The metal powder forming method according to clause 15 or 16, wherein:

the cutting tool is a bit having a cutting blade parallel to the first axis, and

the cutting depth of the bit in the cutting step is less than or equal to the height of each of the protrusions in the radial direction of the second surface of the workpiece.

[Clause 18] The metal powder forming method according to clause 17, wherein:

in the cutting step, the bit can be moved only in the cutting direction, and

the width of the cutting blade of the bit is equal to the width of the knurling tool in the direction of the first axis.

[Clause 19] The metal powder forming method according to any one of clauses 2 to 18, further comprising:

a second rolling step performed to further form the plurality of protrusions on a third surface of the workpiece after the plurality of protrusions rolled in the rolling step are cut in the cutting step, and

a second cutting step performed to form the metal powder by cutting the plurality of protrusions formed in the second rolling step with the cutting tool.

[Clause 20] The metal powder forming method according to any one of clauses 2 to 19, wherein a sliding film is formed on the surface of the forming pattern of the rolling tool.

LIST OF REFERENCE NUMERALS

1 workpiece
5 groove
10 plastic forming tool
10a rolling tool
10b rolling tool
10c knurling tool
11 outer circumferential portion
12 rolling blade
13 tip portion

| | |
|---|---|
| 15 | outer circumferential surface |
| 16 | ridges |
| 17 | bottom portion |
| 20 | cutting tool |
| 20a | rotary tool |
| 20b | bit |
| 21 | cutting blade |
| 22 | nick |
| 23 | tip |
| 25 | cutting blade |
| 30 | protrusion |
| 33 | tip |
| 40 | protrusion |
| A1 | first axis |
| A2 | second axis |
| D2 | cutting depth |
| S1 | first Surface |
| S2 | second surface |
| S3 | third surface |
| $\theta1$ | tip angle |
| H1 | height |
| H3 | height |
| H4 | height |
| M1 | metal powder |
| Pi3 | pitch |
| Pi4 | pitch |
| R4 | radius of curvature |
| 02 | tip angle |
| 03 | tip angle |

**Claims**

1. A metal powder forming method for forming metal powder (M1) by cutting a surface of a metal workpiece (1), comprising:

   a plastic forming step for forming a second surface (S2) having a plurality of protrusions (30) on a first surface (S1) of the workpiece (1) with a rolling tool (10), and
   a cutting step for forming metal powder (M1) by cutting the plurality of the protrusions (30) with a cutting tool (20), and wherein:

   the first surface (S1) of the workpiece (1) has an axisymmetric shape around a first axis (A1),
   the cutting step is performed while the rolling step is performed and the workpiece (1) is rotated around the first axis (A1), and
   in the rolling step, the rolling tool (10) is pressed against the first surface (S1) of the workpiece (1) rotating around the first axis (A1) to form on the first surface (S1), a plurality of first grooves extending in one direction, a plurality of second grooves extending in a direction intersecting the plurality of first grooves, and the plurality of the protrusions (30) arranged in directions in which the plurality of first grooves and the plurality of second grooves each extend.

2. The metal powder forming method according to claim 1,
   the rolling tool (10) is a roller type tool having a plurality of recesses formed on an outer circumferential surface (15) corresponding to the plurality of the protrusions (30).

3. The metal powder forming method according to claim 1,

   the rolling tool (10) comprises a first rolling tool and a second rolling tool,
   wherein the plurality of first grooves is formed by the first rolling tool, and
   the plurality of second grooves is formed by the second rolling tool.

4. The metal powder forming method according to any one of claims 1 to 3, further comprising:

a second rolling step performed to further form the plurality of protrusions (30) on a third surface (S3) of the workpiece (1) after the plurality of protrusions (30) rolled in the rolling step are cut in the cutting step, and a second cutting step performed to form the metal powder (M1) by cutting the plurality of protrusions (30) formed in the second rolling step with the cutting tool (20).

5. The metal powder forming method according to any one of claims 1 to 4, wherein a sliding film is formed on the surface of the forming pattern of the rolling tool (10).

FIG. 1

FIG. 2

FIG. 3A

FIG. 3B

FIG. 4

FIG. 5

FIG. 6

FIG. 7

FIG. 8A

FIG. 8B

FIG. 9

FIG. 10

**FIG. 11**

**FIG. 12**

# FIG. 13

# FIG. 14

FIG. 15

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2017206728 A